(19) Europäisches Patentamt

European Patent Office

Office européen des brevets

(11) Publication number: **0 430 408 B1**

(12) **EUROPEAN PATENT SPECIFICATION**

(45) Date of publication of patent specification: **22.03.95** (51) Int. Cl.⁶: **C08G 18/76**, C08J 9/08

(21) Application number: **90310727.4**

(22) Date of filing: **01.10.90**

The file contains technical information submitted
after the application was filed and not included in
this specification

(54) **Process for producing flexible polyurethane foam.**

| | |
|---|---|
| (30) Priority: **30.11.89 JP 312189/89** | (73) Proprietor: **NIPPON POLYURETHANE INDUS-TRY CO. LTD.** <br> **2-8, Toranomon 1-chome** <br> **Minato-ku** <br> **Tokyo (JP)** |
| (43) Date of publication of application: <br> **05.06.91 Bulletin 91/23** | |
| (45) Publication of the grant of the patent: <br> **22.03.95 Bulletin 95/12** | (72) Inventor: **Tani, Kensuke** <br> **1609-25, Nakata-cho,** <br> **Izumi-ku** <br> **Yokohama-shi,** |
| (84) Designated Contracting States: <br> **BE DE FR GB** | **Kanagawa-ken (JP)** <br> Inventor: **Tonomura, Yoshiaki** <br> **2-6, Tsnunashima Higashi 3-chome,** <br> **Kohoku-ku** |
| (56) References cited: <br> **EP-A- 0 344 551** <br> **FR-A- 2 368 506** | **Yokohama-shi,** <br> **Kanagawa-ken (JP)** |
| **JOURNAL OF CELLULAR PLASTICS, vol, 20, no. 4, July 1984, pafes 285-290 ; BUETHE ET AL: "Flexible polyurethane molded foams based on MDI"** | (74) Representative: **West, Alan Harry et al** <br> **R.G.C. Jenkins & Co.** <br> **26 Caxton Street** <br> **London SW1H 0RJ (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a process for producing a flexible polyurethane foam. More particularly, the present invention relates to a process for producing a flexible polyurethane foam which employs as the blowing agent carbon dioxide, which is generated by the reaction of water with free isocyanate groups, and employs a specific diphenylmethane diisocyanates (hereinafter referred to as "MDI") and a specific polyphenylmethane polyisocyanates (hereinafter referred to as "polymeric MDI") as organic polyisocyanate components.

Flexible polyurethane foams are used in great quantities as cushioning materials in automobiles and furniture. The isocyanate component for producing such flexible polyurethane foams is usually tolylene diisocyanate alone or as a mixture with polymeric MDI.

Tolylene diisocyanate and its analogues, however, generate problems of industrial hygiene because of their high vapor pressures, and further, their curing characteristics in foam production are not satisfactory. Moreover, as is well known, the foamed products thereof undergo large compression set particularly under wet and hot conditions, and are subject to permanent fatigue set, so that such foams are not suitable for uses in which they may be exposed to moisture and heat, and may be compressed. Accordingly, the MDI type polyisocyanates have come to be used solely for the production of flexible polyurethane foams.

In the production of flexible polyurethane foams, water is used as a carbon dioxide-generating agent in combination with a chlorofluorocarbon as an auxiliary blowing agent. The water generates carbon dioxide gas by reaction with free isocyanate groups, and the carbon dioxide gas serves as the blowing agent.

Since the use of chlorofluorocarbons has come to be severely criticized all over the world, methods are now being investigated for producing a flexible polyurethane foam by employing carbon dioxide as substantially the sole blowing agent. The single use of MDI type diisocyanates for producing flexible polyurethane foams, however, involves the disadvantage that a low density foam material is not readily producible without the use of an auxiliary blowing agent in addition to water. For example, Japanese Patent Laid-open Application No. Sho-53-51299 describes a process for producing a flexible polyurethane foam by the one-shot process using a mixture of specific composition of MDI and polymeric MDI. From the use of such an isocyanate mixture, the desired foam density and physical properties are not readily obtainable if trichlorofluoromethane is absent as the auxiliary blowing agent.

US-A-4,945,117 (corresponding to EP-A-0344551) describes the preparation of flexible foams from liquid polyisocyanate mixtures. The polyisocyanate mixtures are said to allow the preparation of flexible foams using large quantities of water as blowing agent, and molded foam products are said to be obtainable having gross densities below 40 kg/m$^3$ without using physical blowing agents. In the only specific example, the liquid polyisocyanate mixture is a crude MDI containing on a weight basis 59.4% 4,4'-MDI, 23.0% 2,4'-MDI, 2.6% 2,2'-MDI and 15.0% polymeric MDI (of unspecified functionality).

The present inventions seeks to provide a method for producing a low-density flexible polyurethane foam by employing carbon dioxide, which is generated by the reaction of water with free isocyanate groups, as substantially the sole blowing agent, and MDI and analogues thereof as the sole organic polyisocyanate without impairing the properties of the foam thus prepared.

The present invention therefore provides a method for producing a flexible polyurethane foam by reacting an active hydrogen compound with an organic polyisocyanate in the presence of a blowing agent, the blowing agent being carbon dioxide which is generated by the reaction of water with free isocyanate and the organic polyisocyanate being a mixture of diphenylmethane diisocyanates and a polyphenylmethane polyisocyanate composition, the mixture containing the diphenylmethane diisocyanates and the polyphenylmethane polyisocyanate composition in a ratio of not more than 1:1, the mixture containing not more than 60% by weight 4,4'-diphenylmethane diisocyanate based on the mixture, and the polyphenylmethane polyisocyanate composition having an average functionality (referred to as "f") of not less than 2.9 and the polyphenylmethane polyisocyanate composition containing less than 35% by weight diphenylmethane diisocyanates. It is preferred that the diphenylmethane diisocyanates contain 2,2'- and 2,4'-isomers in an amount of 20 - 50% by weight and that the polyphenylmethane polyisocyanate composition contains 2,2'- and 2,4'-isomers of diphenylmethane diisocyanates in an amount of less than 2% by weight.

The MDI contains 2,2'-, 2,4'- and 4,4'-isomers.

The production of a flexible polyurethane foam may be conducted by the "one-shot process" in the present invention.

The organic polyisocyanate employed in the present invention is a mixture of the MDI (which contains 2,2'-, 2,4'- and 4,4'-isomers) and the polymeric MDI having f of 2.9 or more, the ratio of the MDI to the polymeric MDI being 1.0 or less and the polymeric MDI containing MDI in an amount of less than 35% by weight and the mixture containing 4,4'-MDI in an amount of 60% by weight or less. It is preferred that the MDI contains 2,2'- and 2,4'-isomers in an amount of 20 - 50% by weight and that the polymeric MDI contains 2,2'- and 2,4'-isomers of MDI in an amount of less than 2% by weight. The organic polyisocyanate is blended with an active hydrogen compound known for production of flexible polyurethane foams, and any additives, and water is used to generate carbon dioxide gas as the blowing agent to give a foamed product.

The resulting flexible polyurethane foam has high elasticity and excellent tear properties, and can be made low-density even by use of MDI alone without use of an auxiliary blowing agent.

The active hydrogen-containing component used in the present invention includes polyetherpolyols, and other polyols having at least two hydroxyl groups in the molecule, such as polyesterpolyols, epoxypolyols, and combinations thereof.

The polyetherpolyol can be prepared by addition-polymerizing, in a known method, one or more monomers such as ethylene oxide, propylene oxide, butylene oxide, styrene oxide and epichlorohydrin to an initiator which has at least two active hydrogen atoms such as ethylene glycol, diethylene glycol, triethylene glycol, 1,2-propylene glycol, trimethylene glycol, 1,3-butylene glycol, tetramethylene glycol, hexamethylene glycol, glycerol, sorbitol, sucrose, trimellitic acid, bisphenol A and ethylenediamine.

In the production of flexible polyurethane foams, water is used as a carbon dioxide-generating agent,usually in combination with a chlorofluorocarbon or a low-boiling solvent as an auxiliary blowing agent to help the blowing action of carbon dioxide gas. However, in the present invention, since the use of chlorofluorocarbons has come to be severely criticized all over the world, water alone is employed for generating carbon dioxide as substantially the sole blowing agent.

The additives which may be used in the active hydrogen component in the present invention include a catalyst, a foam stabilizer, and if necessary a flame retardant, a viscosity modifier and a pigment.

The catalyst includes tertiary amines such as dimethylethanolamine, triethylenediamine, tetramethylpropanediamine, tetramethylhexamethyelediamine and dimethylcyclohexylamine; and organic tin compounds such as stannous octoate and dibutyltin dilaurate.

The foam stabilizers include various siloxane, polyalkylene oxide block copolymers, and are selected depending on the formulation recipe.

The flame retardant includes tris(chloroethyl) phosphate, tris(chloropropyl) phosphate, tricresyl phosphate and chlorinated paraffin.

The viscosity modifier includes dibutyl phthalate, dioctyl phthalate, alkylene carbonates, and the like.

In the present invention, an MDI mixture is used as the sole organic polyisocyanate without modification by use of the active hydrogen compound, and carbon dioxide generated by the reaction of water with free isocyanate groups is used as substantially the sole blowing agent. Additionally the MDI mixture employed is within the range specified below, in order to cancel the disadvantages of inferior physical properties of foamed products and difficulty in attaining a lower density.

The MDI mixture is a mixture of the MDI component and the polymeric MDI. The mixture contains the MDI and the polymeric MDI in a ratio of not more than 1.0 and 4,4'-MDI in an amount of not more than 60% by weight based on the isocyanate mixture. The polymeric MDI has an average functionality (referred to as "f") of not less than 2.9 and contain MDI in an amount of less than 35% by weight. It is preferred that the MDI contains 2,2'- and 2,4'-isomers in an amount of 20 - 50% by weight and that the polymeric MDI contains 2,2'- and 2,4'-isomers of MDI in an amount of less than 2% by weight.

In the production of flexible polyurethane foam using only an MDI mixture, problems generally arise in impact resilience, elongation properties and tear properties, irrespective of whether there is used a prepolymer method or a one-shot method, and irrespective of whether there is used an auxiliary blowing agent. In particular, in the case where water is used for generating carbon dioxide as the blowing agent, a low foam density is not attainable. The limitations on the MDI mixture in the present invention are of great significance in cancelling the above disadvantages.

The process for producing a flexible polyurethane foam of the present invention employs a quite specific MDI mixture, that is a mixture of MDI and polymeric MDI in a ratio of not more than 1.0, in which the polymeric MDI contains MDI in an amount of less than 35% by weight and has f of not less than 2.9, and the content of 4,4'-MDI in the mixture of the MDI and the polymeric MDI is not more than 60% by weight. It is preferred that the polymeric MDI contains 2,2'- and 2,4'-MDI in an amount of less than 2% by weight and that the MDI contains 2,2'- and 2,4'-isomers in an amount of 20 - 50% by weight. The use of the above specified MDI mixture makes it possible to obviate the difficulty in achieving a low foam density, and solves the problems of low impact resilience, low tear properties, and low elongation properties which are liable to be caused by use of water for generating carbon dioxide as a blowing agent.

The present invention is illustrated by the following Examples. The "part" and "%" in the Examples are based on weight unless otherwise mentioned.

Preparation of Organic Polyisocyanate Compounds

While keeping 500 parts of an MDI containing 2,2'- and 2,4'-isomer mixture in an amount of 25.0% in a liquid state, 500 parts of polymeric MDI containing 29.5% MDI and 1.3% 2,2'- and 2,4'-isomers and having an f value of 2.96 was added. The mixture was stirred for about 10 minutes to prepare an organic polyisocyanate compound (A) for blowing tests. This isocyanate compound contained 52.1% 4,4'-MDI.

In the same manner, organic polyisocyanate compounds (B) to (I) were prepared. The organic polyisocyanate compounds (A) to (I) correspond to Examples of the invention and (G) to (I) correspond to Comparative Examples.

Table 1 shows the starting material compositions for the prepared polyisocyanate compounds and the quantities used.

Examples 1 - 10, and Comparative Examples 1 - 3

Flexible polyurethane foams were prepared using the organic polyisocyanate compounds (A) to (I). The formulations are shown in Table 2. The blowing rate and the physical properties of the resulting molded foams are shown in Table 3.

TABLE 1

| Organic polyisocyanate compound | (A) | (B) | (C) | (D) | (E) | (F) | (G) | (H) | (I) |
|---|---|---|---|---|---|---|---|---|---|
| MDI  2,2'-and 2,4'- | | | | | | | | | |
| Isomer content (%) | 25.0 | 25.0 | 25.0 | 35.0 | 35.0 | 35.0 | 10.0 | 25.0 | 25.0 |
| Quantity (parts) | 500 | 500 | 400 | 500 | 500 | 450 | 500 | 500 | 600 |
| Polymeric MDI | | | | | | | | | |
| MDI content (%) | 29.5 | 33.8 | 33.8 | 28.7 | 34.4 | 34.4 | 29.5 | 48.0 | 48.0 |
| Isomer content in MDI (%) | 1.3 | 0.8 | 0.8 | 1.5 | 0.9 | 0.9 | 1.3 | 0.6 | 0.6 |
| f | 2.96 | 2.92 | 2.92 | 2.98 | 2.91 | 2.91 | 2.96 | 2.67 | 2.67 |
| Quantity (parts) | 500 | 500 | 600 | 500 | 500 | 550 | 500 | 500 | 400 |
| 4,4'-MDI content in the mixture  (%) | 52.1 | 54.3 | 50.1 | 46.6 | 49.5 | 48.0 | 59.6 | 61.4 | 64.1 |
| Mixing ratio | 1.0 | 1.0 | 0.67 | 1.0 | 1.0 | 0.82 | 1.0 | 1.0 | 1.5 |
| NCO content of organic polyisocyanate  (%) | 31.7 | 31.8 | 31.5 | 31.7 | 31.8 | 31.7 | 31.7 | 32.2 | 32.4 |

EP 0 430 408 B1

TABLE 2

| | Example | | | | | | | | | | Comparative example | | |
|---|---|---|---|---|---|---|---|---|---|---|---|---|---|
| | 1 | 2 | 3 | 4 | 5 | 6 | 7 | 8 | 9 | 10 | 1 | 2 | 3 |
| **Active hydrogen-containing component** (Parts) | | | | | | | | | | | | | |
| Polyetherpolyol 1) | 100 | | 100 | 100 | | 100 | | 100 | 100 | | | | |
| Polyetherpolyol 2) | | 100 | | | 100 | | 100 | | | 100 | 100 | 100 | 100 |
| Polyetherpolyol 3) | | 2.0 | | | 2.0 | | 2.0 | | | 2.0 | 2.0 | 2.0 | 2.0 |
| Polyetherpolyol 4) | 1.0 | | 1.0 | 1.0 | | 1.0 | | 1.0 | 1.0 | | | | |
| Water | 3.8 | 3.8 | 3.8 | 3.8 | 3.8 | 3.8 | 3.8 | 3.8 | 3.8 | 3.8 | 3.8 | 3.8 | 3.8 |
| TOYOCAT-ET 5) | 0.1 | 0.1 | 0.1 | 0.1 | 0.1 | 0.1 | 0.1 | 0.1 | 0.1 | 0.1 | 0.1 | 0.1 | 0.1 |
| TEDA-L33 5) | 0.4 | 0.35 | 0.5 | 0.3 | 0.3 | 0.35 | 0.3 | 0.4 | 0.3 | 0.3 | 0.6 | 0.6 | 0.65 |
| Foam stablilzer 6) | 0.7 | 0.7 | 0.7 | 0.7 | 0.7 | 0.7 | 0.7 | 0.7 | 0.7 | 0.7 | 0.7 | 0.7 | 0.7 |
| **Organic polyisocyanate compound** (parts) | (A) 56.4 | (A) 55.5 | (B) 56.3 | (C) 56.6 | (C) 55.8 | (D) 56.3 | (D) 55.5 | (E) 56.2 | (F) 56.3 | (F) 55.5 | (G) 55.8 | (H) 55.0 | (I) 54.7 |
| **Isocyanate index** | 90 | 90 | 90 | 90 | 90 | 90 | 90 | 90 | 90 | 90 | 90 | 90 | 90 |

Note:
1) f = 3, MW = 6500, EO content = 9 %
2) f = 3, MW = 7650, EO content = 15 %
3) f = 4, MW = 8000, EO content = 80 %
4) f = 2, MW = 4700, EO content = 80 %
5) Catalyst, made by Tosoh Corpration
6) Sz-1306, made by Nippon Unicar K.K.

EP 0 430 408 B1

TABLE 3

| Foaming rate (seconds) | Example | | | | | | | | | | Comparative example | | |
|---|---|---|---|---|---|---|---|---|---|---|---|---|---|
| | 1 | 2 | 3 | 4 | 5 | 6 | 7 | 8 | 9 | 10 | 1 | 2 | 3 |
| Cream time | 10 | 10 | 9 | 11 | 12 | 11 | 11 | 10 | 11 | 11 | 8 | 8 | 8 |
| Gel time | 92 | 90 | 83 | 98 | 102 | 93 | 100 | 90 | 99 | 103 | 76 | 73 | 82 |
| Rise time | 121 | 116 | 110 | 129 | 130 | 123 | 133 | 122 | 130 | 136 | 104 | 100 | 113 |
| Free rise density (kg/m$^3$) | 40.2 | 38.6 | 39.0 | 39.2 | 39.8 | 38.7 | 40.0 | 38.3 | 39.5 | 40.1 | 42.5 | 41.8 | 41.6 |
| Foam properties | | | | | | | | | | | | | |
| Overall density (Kg/m$^3$) 1) 2) | 50.1 | 47.6 | 49.2 | 48.6 | 49.5 | 47.4 | 49.8 | 48.1 | 49.4 | 49.5 | 54.5 | 53.6 | 55.0 |
| 25% ILD (Kg/200mm diam.) 2) | 20.3 | 19.5 | 20.0 | 19.9 | 20.0 | 19.4 | 20.1 | 19.6 | 20.1 | 20.6 | 21.6 | 20.8 | 22.5 |
| Resilience (%) 2) (Ball rebound resilience) | 66.0 | 64.5 | 64.5 | 66.5 | 64.0 | 65.0 | 64.5 | 64.0 | 65.5 | 65.5 | 58.5 | 56.5 | 55.0 |
| Tensile strength (Kg/cm$^2$) 3) | 1.45 | 1.44 | 1.45 | 1.78 | 1.66 | 1.60 | 1.54 | 1.55 | 1.60 | 1.65 | 1.33 | 1.27 | 1.24 |
| Elongation (%) (Elongation rate) | 134 | 138 | 129 | 122 | 120 | 136 | 134 | 139 | 128 | 124 | 116 | 124 | 127 |
| Tear strength (Kg/cm) 3) | 0.84 | 0.88 | 0.86 | 0.92 | 0.94 | 0.83 | 0.82 | 0.84 | 0.93 | 0.91 | 0.69 | 0.62 | 0.66 |
| 50%-compression set at original state (%) 2) (Thickness change rate) | 3.3 | 3.6 | 4.0 | 2.7 | 2.9 | 3.4 | 3.2 | 3.8 | 2.9 | 2.8 | 5.7 | 6.4 | 7.6 |

Note: 1) Molded product in an aluminum mold 300 × 300 × 100 mm, Mold temperature: 53 ± 3 °C, Mold release: 4 minutes
2) JIS K 6401
3) JIS K 6301

## Claims

1. A method for producing a flexible polyurethane foam by reacting an active hydrogen compound with an organic polyisocyanate in the presence of a blowing agent, the blowing agent being carbon dioxide which is generated by the reaction of water with free isocyanate and the organic polyisocyanate being a mixture of diphenylmethane diisocyanates and a polyphenylmethane polyisocyanate composition, the mixture containing the diphenylmethane diisocyanates and the polyphenylmethane polyisocyanate composition in a ratio of not more than 1:1 and the mixture containing not more than 60% by weight 4,4'-diphenylmethane diisocyanate based on the mixture, and the polyphenylmethane polyisocyanate composition having an average functionality of not less than 2.9 and the polyphenylmethane polyisocyanate composition containing less than 35% by weight diphenylmethane diisocyanates.

2.  A method according to claim 1, wherein the diphenylmethane diisocyanates contain 2,2'- and 2,4'-isomers in an amount of 20 to 50% by weight.

3.  A method according to claim 1 or claim 2, wherein the polyphenylmethane polyisocyanate composition contains 2,2'- and 2,4'- diphenylmethane diisocyanates in an amount of less than 2% by weight.

**Patentansprüche**

1.  Ein Verfahren zum Herstellen eines Polyurethanweichschaums durch Umsetzen einer aktiven Wasserstoffverbindung mit einem organischen Polyisocyanat in Gegenwart eines Treibmittels, wobei das Treibmittel Kohlendioxyd ist, das durch die Reaktion von Wasser mit freiem Isocyanat gebildet wird, und wobei das organische Polyisocyanat eine Mischung von Diphenylmethandiisocyanaten und einer Polyphenylmethanpolyisocyanat-Zusammensetzung ist, wobei die Mischung die Diphenylmethandiisocyanate und die Polyphenylmethanpolyisocyanat-Zusammensetzung in einem Verhältnis von nicht mehr als 1:1 enthält und die Mischung nicht mehr als 60 Gew.-% 4,4'-Diphenylmethandiisocyanat, bezogen auf die Mischung, enthält und die Polyphenylmethanpolyisocyanatzusammensetzung eine Durchschnittsfunktionalität von nicht weniger als 2,9 besitzt und die Polyphenylmethanpolyisocyanatzusammensetzung weniger als 35 Gew.-% Diphenylmethandiisocyanate enthält.

2.  Ein Verfahren nach Anspruch 1, wobei die Diphenylmethandiisocyanate 2,2'- und 2,4'-Isomere in einer Menge von 20 bis 50 Gew.-% enthalten.

3.  Ein Verfahren nach Anspruch 1 oder Anspruch 2, wobei die Polyphenylmethanpolyisocyanat-Zusammensetzung 2,2'- und 2,4'-Diphenylmethandiisocyanate in einer Menge von weniger als 2 Gew.-% enthalten.

**Revendications**

1.  Procédé de production d'une mousse de polyuréthanne flexible par réaction d'un composé contenant de l'hydrogène actif avec un polyisocyanate organique en présence d'un agent porogène, l'agent porogène étant l'anhydride carbonique qui est engendré par réaction de l'eau avec les groupes isocyanate libres et le polyisocyanate organique consistant en un mélange de diisocyanates de diphénylméthane et d'une composition de polyisocyanate de polyphénylméthane, le mélange contenant les diisocyanates de diphénylméthane et la composition de polyisocyanate de polyphénylméthane en un rapport non supérieur à 1:1, le mélange ne contenant pas plus de 60 % en poids de diisocyanate de 4,4-diphénylméthane sur la base du mélange, la composition de polyisocyanate de polyphénylméthane ayant une fonctionnalité moyenne non inférieure à 2,9 et la composition de polyisocyanate de polyphénylméthane contenant moins de 35 % en poids de diisocyanates de diphénylméthane.

2.  Procédé suivant la revendication 1, dans lequel les diisocyanates de diphénylméthane contiennent les isomères 2,2' et 2,4' en une quantité de 20 à 50 % en poids.

3.  Procédé suivant la revendication 1 ou la revendication 2, dans lequel la composition de polyisocyanate de polyphénylméthane contient des diisocyanates de 2,2'- et 2,4'-diphénylméthanes en une quantité inférieure à 2 % en poids.